# EUROPÄISCHE PATENTSCHRIFT

(11) **EP 3 794 256 B1**
(45) Veröffentlichungstag und Bekanntmachung des Hinweises auf die Patenterteilung: **13.09.2023**
(21) Anmeldenummer: 19725315.6
(22) Anmeldetag: 15.05.2019
(51) Int. Cl.: F16K 1/36, F16K 1/42, F16K 15/06, F16K 27/02, F25B 40/00, F28F 9/02, F28F 27/02, F28D 7/10

(54) **RÜCKSCHLAGVENTIL, INSBESONDERE FÜR EINEN KÄLTE- ODER WÄRMEKREISLAUF**
NON-RETURN VALVE, IN PARTICULAR FOR A REFRIGERATION OR HEAT CIRCUIT
SOUPAPE DE RETOUR, EN PARTICULIER POUR UN CIRCUIT DE REFROIDISSEMENT OU DE CHAUFFAGE

(30) Priorität: 16.05.2018 DE 102018111811
(43) Veröffentlichungstag der Anmeldung: 24.03.2021
(73) Patentinhaber: Otto Egelhof GmbH & Co. KG, 70736 Fellbach (DE)
(72) Erfinder: WILLERS, Eike, 70469 Stuttgart (DE); AUWEDER, Andreas, 71665 Vaihingen (DE); MAURER, Rainer, 71522 Backnang (DE); ROTH, Siegfried, 70839 Gerlingen (DE); WAGNER, Bernhard, 70736 Fellbach (DE); HELLMUTH, Uwe, 71404 Korb (DE)
(74) Vertreter: Mammel und Maser Patentanwälte PartG mbB
(86) Internationale Anmeldenummer: PCT/EP2019/062441
(87) Internationale Veröffentlichungsnummer: WO 2019/219732

(56) Entgegenhaltungen:
- EP-A1- 2 674 650
- EP-A1- 3 156 661
- DE-A1-102016 200 727
- JP-A- 2001 280 521
- US-A- 2 260 381
- US-A- 4 930 539
- US-A1- 2005 198 979
- US-A1- 2009 250 123
- US-A1- 2010 006 159
- US-A1- 2011 126 921
- US-A1- 2017 342 976
- US-B1- 6 955 181

## Beschreibung

Die Erfindung betrifft ein Rückschlagventil, welches insbesondere für einen Kälte- oder Wärmekreislauf einsetzbar ist.

Aus der JP 2001-280 521 A ist ein Rückschlagventil bekannt, welches aus einem zweiteiligen Gehäuse besteht. In diesem Gehäuse ist ein Strömungskanal vorgesehen, der mit einem Ventilschließglied in einer Ausgangsposition geschlossen ist. Das Ventilschließglied ist in einer Öffnung eines Grundgehäuses durch einen axialen Führungsstab geführt. Zwischen dem Grundgehäuse und dem Ventilschließglied ist koaxial zum Führungsstab ein Kraftspeicherelement vorgesehen, welches das Ventilschließglied in einer Ausgangsposition anordnet. In dieser Ausgangsposition schließt das Ventilschließglied den Strömungskanal bzw. eine Einlassöffnung an einem Ventilgehäuse, welches mit dem Grundgehäuse verbunden ist.

Eine analoge Anordnung ist aus der AU 2013 297717 B2, der DE 201 18 810 U1 und der US 4 955 407 A bekannt.

Die EP 3 156 661 A1 offenbart ein Rückschlagventil nach dem Oberbegriff des Anspruchs 1.

Aus der EP 3 156 661 A1 ist ein Rückschlagventil für ein Hauswasserwerk oder eine Pumpe bekannt, welches in einem Strömungskanal angeordnet ist. Dieses Rückschlagventil umfasst einen Dichtkörper, der als Ventilschließglied ausgebildet ist und an einem Ventilsitz in einer Schließposition anliegt. In den Strömungskanal weisend sind Schenkel mit Führungsflächen vorgesehen.

Die US 2010/0006159 A sowie die DE 10 2016 200 727 A1 betreffen Rückschlagventile, bei denen eine Dichtung zur Abdichtung einer ringförmigen Öffnung in einer Schließposition vorgesehen ist.

Aus der US 4,930,539 A sowie der US 2009/0250123 A sind in Rohrstücke einsetzbare Rückschlagventile offenbart. Diese Rückschlagventile weisen einen gekrümmten Schließkörper auf, der an einer Ringdichtung beziehungsweise einem konischen Gehäuse in einer Schließposition anliegt.

Aus der US 2005/0198979 A1 sowie der US 2011/0126921 A1 sind einfach aufgebaute Rückschlagventile als Einbaupatronen bekannt. Das Ventilschließglied liegt gegenüber dem Kraftspeicherelement jeweils auf der Niederdruckseite.

Aus der EP 2 674 650 A1 ist ein Sicherheitsventil bekannt, bei welchem eine auf und ab bewegbare Verschlusskappe in einer topfförmigen Aufnahme durch Anlage einer Dichtung an einem Ventilsitz offenbart ist.

Aus der US 6 955 181 B1 ist ein Sicherheitsventil bekannt, welches ein Ventilschließglied mit einer Dichtung umfasst, welche an dem Ventilsitz formschlüssig anliegt. Eine analoge Ausgestaltung des Ventils ist aus der US 2 260 381 A sowie der US 2017/342976 A bekannt.

Solche Rückschlagventile dienen der Sicherung von Betriebszuständen und der Steuerung einer Strömungsrichtung eines Mediums in einer Kälte- oder Wärmeanlage, insbesondere einer Fahrzeugklimaanlage.

Bei Kältekreisläufen, insbesondere mit Fluorgasen, wird zunehmend eine Reduzierung der Leckage gefordert, um dem Treibhauseffekt entgegenzuwirken. Jede Schnittstelle oder Anschlussstelle in einem Kältekreislauf kann zur Erhöhung der Leckagerate beitragen.

Der Erfindung liegt die Aufgabe zugrunde, ein Rückschlagventil für Kälte- oder Wärmekreisläufe vorzuschlagen, welches einen einfachen Aufbau aufweist und insbesondere einen Einsatz ohne eine zusätzliche Anschlussstelle in einem Kälte- oder Wärmekreislauf ermöglicht.

Diese Aufgabe wird durch ein Rückschlagventil gelöst, welches ein einteiliges oder mehrteiliges rohrförmiges Gehäuse umfasst, wobei eingangsseitig eine Zuführöffnung und ausgangsseitig an dem Grundkörper eine Abführöffnung vorgesehen ist, wobei die Zuführöffnung und die Abführöffnung durch einen Strömungskanal miteinander verbunden sind und an dem Grundgehäuse ein Führungselement vorgesehen ist, durch welches ein Ventilschließglied verschiebbar zum Grundgehäuse geführt und das Ventilschließglied durch ein Kraftspeicherelement in einer Ausgangsposition angeordnet ist und bei einer Arbeitsposition das Ventilschließglied in Richtung auf die Abführöffnung entgegen einer Stellkraft des Kraftspeicherelements verschiebbar ist und zwischen dem Ventilschließglied und dem Gehäuse vorgesehen ist. Erfindungsgemäß ist vorgesehen, dass das Führungselement des Grundgehäuses zumindest eine Durchbrechung aufweist und in dieser zumindest einen Durchbrechung zumindest ein Führungsstab geführt ist, welcher sich ausgehend von dem Ventilschließglied durch die zumindest eine Durchbrechung hindurch erstreckt und gegen Lösen aus dieser Durchbrechung gesichert ist. Dadurch ist sowohl ein einfacher als auch kompakter Aufbau eines solches Rückschlagventils gegeben. Dieses Rückschlagventil kann aus wenigen Bauteilen bestehen und beispielsweise das Kraftspeicherelement, den Grundkörper und das Ventilschließglied umfassen. Dadurch ist eine kostengünstige Herstellung gegeben. Insbesondere durch das einteilige Grundgehäuse oder ein insbesondere zweiteiliges rohrförmiges Gehäuse des Rückschlagventils, welches vorzugsweise patronenförmig ausgebildet ist, kann dieses Rückschlagventil als eine Baueinheit auch in ein Rohr oder eine Durchgangsöffnung einsetzbar sein, sodass dadurch keine zusätzliche Schnittstelle erforderlich wird.

Bevorzugt ist vorgesehen, dass der Boden des Führungselementes wenigstens eine, vorzugsweise drei, schlitzförmige Durchbrechungen aufweist, die miteinander verbunden sind. Innerhalb des Führungsabschnittes des Ventilschließgliedes und des Führungselementes ist zumindest ein Führungsstab ausgebildet, welcher sich durch die zumindest eine Durchbrechung im Boden des Führungselementes erstreckt und in der zumindest einen Durchbrechung am Boden geführt ist. Dadurch kann eine zusätzliche Führung des Ventilschließgliedes zum Grundgehäuse gegeben sein.

Bevorzugt ist vorgesehen, dass der zumindest eine Führungsstab zumindest ein, vorzugsweise radial, nach außen gerichtetes Sperrelement aufweist, welches dem Kraftspeicherelement entgegenwirkt, und welches zwischen dem Grundgehäuse und dem Ventilschließglied wirkt. Das Ventilschließglied kann dadurch in einer Ausgangsposition fixiert sein. Diese Ausgestaltung ermöglicht einen einfachen Aufbau des Rückschlagventils, welches aus dem Grundgehäuse und dem Ventilschließglied besteht, wobei das Ventilschließglied durch den wenigstens einen Führungsstab zum Grundgehäuse selbsthaltend in einer Ausgangsposition positionierbar ist. Dadurch kann eine handhabbare Einheit als Rückschlagventil geschaffen sein.

Des Weiteren ist bevorzugt vorgesehen, dass der wenigstens eine, vorzugsweise die drei, zueinander beabstandeten Führungsstäbe aufeinander zubewegbar sind, welche vorzugsweise sternförmig zueinander ausgerichtet sind, um durch die Durchbrechung am Boden hindurchzuführen und anschließend ein Lösen des Ventilschließgliedes zum Grundgehäuse zu sperren. Dies ermöglicht eine einfache Montage des Ventilschließgliedes unter Zwischenschaltung des Kraftspeicherelementes zum Grundgehäuse.

Die Durchbrechung im Grundgehäuse besteht zumindest aus einer, vorzugsweise aus drei, langlochförmig ausgebildeten Öffnungen, die zu einer Längsmittelachse des Grundgehäuses ausgerichtet sind und im Bereich der Längsmittelachse ineinander übergehen. Dadurch ist ein einfaches Durchführen der Führungsstege zur Montage und Fixierung des Ventilschließgliedes zum Grundgehäuse ermöglicht. Erfindungsgemäß wird das Kraftspeicherelement zwischen dem Grundgehäuse und dem Ventilschließglied gehalten.

Eine bevorzugte Ausgestaltung sieht vor, dass das Kraftspeicherelement koaxial zum zumindest einen Führungsstab vorgesehen ist und diesen beziehungsweise diese umgibt. Dadurch kann zusätzlich noch eine Führung des Kraftspeicherelementes gegeben sein.

Bevorzugt ist vorgesehen, dass das Kraftspeicherelement zwischen dem Grundgehäuse und dem Ventilschließglied vorgespannt angeordnet ist. Das Kraftspeicherelement ist in Bezug auf die Federkonstante und/oder Länge an die Einbauverhältnisse des Grundgehäuses und Ventilschließglied ausgelegt und angepasst. Dadurch kann auch die Vorspannkraft bestimmt werden. Durch die Montage des Ventilschließgliedes zum Gehäuse wird das Kraftspeicherelement vorgespannt. Dadurch können ein Öffnungszeitpunkt bzw. ein Öffnungsdruck für das Ventilschließglied einstellbar sein. Die Vorspannung erhöht auch die Rückstellkraft wodurch auch ein schnellerer Schließvorgang des Rückschlagventils ermöglicht ist.

Des Weiteren ist bevorzugt der Führungsabschnitt des Ventilschließgliedes an dem Führungselement durch zumindest eine Führungsrippe geführt. Diese zumindest eine Führungsrippe kann zwischen dem Führungsabschnitt des Ventilschließgliedes und dem Führungselement angeordnet sein. Alternativ kann die zumindest eine Führungsrippe auch innerhalb des Führungselementes, also an einer Innenseite der Hülse, vorgesehen sein, um das Ventilschließglied zu führen.

Eine weitere vorteilhafte Ausgestaltung des Rückschlagventils sieht vor, dass das Führungselement durch die zumindest eine Längsrippe in dem Strömungskanal des Grundkörpers positioniert ist. Beispielsweise können drei sternförmig zueinander ausgerichtete Längsrippen oder mehrere Längsrippen vorgesehen sein, um zentrisch zum Grundgehäuse das Führungselement aufzunehmen. Diese Längsrippen können als Stege ausgebildet sein, die sich vom Führungselement radial nach außen erstrecken.

Das Ventilschließglied weist vorteilhafterweise einen kugelförmigen oder projektilförmigen Schließkörper auf, der zur Zutrittsöffnung weist und den Ventilsitz schließt, welcher vorzugsweise in einem Ventilgehäuse, welches an dem Grundgehäuse befestigbar ist oder an der Anschlussvorrichtung vorgesehen ist. An den Schließkörper schließt sich stromabwärts beziehungsweise zur Abführöffnung ausgerichtet der Führungsabschnitt, vorzugsweise stufenlos, an. Dadurch kann eine strömungsgünstige Geometrie geschaffen werden, um Strömungsverluste oder Verwirbelungen bei Durchtritt des Kältemittels durch den Strömungskanal bei geöffnetem Ventil zu verhindern.

Eine weitere vorteilhafte Ausgestaltung des Rückschlagventils sieht in einem Außenumfang des Schließkörpers des Ventilschließgliedes eine Vertiefung vor, in der ein Dichtelement, insbesondere eine O-Ring-Dichtung, vorgesehen ist. Dadurch kann zusätzlich eine abdichtende Wirkung in einer Schließposition oder Ausgangsposition des Ventilschließgliedes zum Ventilsitz gegeben sein.

Bei der Anordnung des Schließkörpers des Ventilschließgliedes ist in seiner Ausgangsposition oder Schließposition vorgesehen, dass der Schließkörper des Ventilschließgliedes mit seiner Außenfläche an dem Ventilsitz formschlüssig anliegt und das Dichtelement in Strömungsrichtung nachgeschaltet nur abdichtend an dem Ventilsitz angreift. Diese Anordnung weist den Vorteil auf, dass der Schließkörper die eigentliche Schließkraft durch das Kraftspeicherelement aufnimmt und am Ventilsitz anliegt, wohingegen das Dichtelement lediglich eine abdichtende Wirkung hat, ohne dass dieses Dichtelement die Schließkraft aufnimmt. Dadurch kann eine langanhaltende Wirkung erzielt werden.

Des Weiteren ist bevorzugt vorgesehen, dass das Grundgehäuse eine, vorzugsweise lösbare, Anschlussschnittstelle aufweist, die in Richtung zum Ventilschließglied weist und ein Ventilgehäuse anschließbar ist. Dadurch wird die Montage des Kraftspeicherelementes und des Ventilschließgliedes zum Grundgestell vereinfacht.

Der Ventilsitz am Ventilgehäuse oder an der Anschlusseinrichtung ist bevorzugt durch eine düsenförmige Querschnittsverengung gebildet. Dadurch ist ein strömungsgünstiger Verlauf ohne Abrisskanten ausgebildet.

Des Weiteren weist das Ventilgehäuse bevorzugt eine Einschnürung auf, in der ein Dichtelement vorgesehen ist. Bevorzugt grenzt die Einschnürung an einem äußeren, insbesondere stirnseitigen, Ringbund des Ventilgehäuses an. Durch den Ringbund kann einerseits eine definierte Positionierung des Rückschlagventils in einer Anschlussstelle oder in einem Rohr gegeben sein. Des Weiteren wird durch die an den Ringbund angrenzend angeordnete Dichtung eine Abdichtung zwischen dem Ventilgehäuse und einer inneren Mantelfläche der Anschlussstelle ermöglicht, sodass das Medium ausschließlich das Rückschlagventil durchströmt.

Die lösbare Schnittstelle zwischen dem Ventilgehäuse und dem Grundgehäuse kann als Rast-, Schnapp-, Steck-, Press- oder als Schraubverbindung ausgebildet sein. Vorzugsweise sind alle Verbindungen derart auszugestalten, dass diese mediendicht sind.

Vorteilhafterweise ist die Schnittstelle in einem zylindrischen oder konischen Abschnitt des Grundgehäuses vorgesehen. Dadurch ist die Schnittstelle im Bereich eines größeren Durchmessers angeordnet und somit bezüglich deren Herstellung vereinfacht.

Des Weiteren ist bevorzugt ein Anschlussabschnitt des Ventilgehäuses innenliegend oder außenliegend zum Anschlussabschnitt des Grundgehäuses vorgesehen. Sofern auf diese Schnittstelle ein Druck durch das Medium wirkt, welches den Strömungskanal durchströmt, wird durch diese Anordnung zusätzlich ein Formschluss zwischen den beiden aneinanderliegenden Anschlussabschnitten bewirkt, insbesondere bei einer Rast- oder Schnappverbindung.

Eine weitere vorteilhafte Ausgestaltung der Erfindung sieht vor, dass der Grundkörper käfigartig ausgebildet ist. Dies ermöglicht eine weitere Querschnittsreduzierung bei der Ausgestaltung des Rückschlagventils, da das radiale Einbauvolumen des Grundgehäuses zumindest um die Wandstärke des Grundgehäuses reduziert werden kann.

Vorteilhafterweise ist zumindest das Ventilgehäuse und/oder das Grundgehäuse und/oder das Ventilschließglied aus einem einkomponentigen oder zweikomponentigen Kunststoff oder einer Kunststoff-Elastomer-Kombination hergestellt. In Abhängigkeit des Mediums kann der Kunststoff ausgewählt werden. Beispielsweise können Polypropylen, Polyethylen, Polyurethan, ABS oder dergleichen vorgesehen sein. Die Geometrien des Ventilgehäuses, des Grundgehäuses und des Ventilschließgliedes sind derart gewählt, dass diese als einfache Spritzgussteile herstellbar sind.

Eine weitere bevorzugte Ausgestaltung des Rückschlagventils sieht vor, dass die kleinste Öffnung der Anschlussöffnung der Anschlusseinrichtung oder des Ventilgehäuses ein Verhältnis zur Gesamtlänge des Rückschlagventils von 0,2 bis 4 aufweist.

Des Weiteren ist bevorzugt vorgesehen, dass der kleinste Öffnungsdurchmesser der Anschlussöffnung der Anschlusseinrichtung oder des Ventilgehäuses ein Verhältnis zum Außendurchmesser des Rückschlagventils von 1 bis 2,5 umfasst.

Eine weitere bevorzugte Ausgestaltung des Rückschlagventils sieht vor, dass der größte Außendurchmesser des Ventilschließgliedes zur Länge des Ventilschließgliedes in einem Bereich von 0,3 bis 3 liegt.

Bei der Ausgestaltung des Rückschlagventils ist vorgesehen, dass das Ventilschließglied in einer Ausgangsposition und in einer ersten Öffnungsphase durch den zumindest einen Führungsstab im Führungselement und durch zumindest eine an dem Schließkörper des Ventilschließgliedes entgegengesetzt zum zumindest einen Führungselement ausgerichtet Führungsrippe geführt ist, die in der Anschlussöffnung der Anschlusseinrichtung oder des Ventilgehäuses eingreift. In einer zweiten Öffnungsphase bis zur Arbeitsposition des Ventilschließgliedes wird das Ventilschließglied durch den zumindest einen Führungsstab im Führungselement und durch einen den zumindest einen Führungsstab teilweise umgebenden Führungsabschnitt am Ventilschließglied und einer Hülse am Führungselement geführt. Durch eine solche Anordnung kann eine sequentielle Führung des Ventilschließgliedes im Grundgehäuse und Ventilgehäuse ermöglicht sein. Dadurch kann auch im Hinblick auf das durchströmende Medium eine gesicherte Führung des Ventilschließgliedes zwischen der Ausgangsposition und der Arbeitsposition erzielt werden. Störende Querbewegungen des Ventilschließgliedes, insbesondere beim Überführen in eine Arbeitsposition, können minimiert oder verhindert sein.

Eine weitere vorteilhafte Ausgestaltung des Rückschlagventils gemäß der zweiten Alternative sieht vor, dass in der Arbeitsposition des Ventilschließgliedes das Kraftspeicherelement durch den Führungsabschnitt und die Hülse derart ineinandergreifen, dass das Kraftspeicherelement gegenüber dem Strömungskanal abgeschirmt ist. Dadurch kann die Führung zwischen dem zumindest einen Führungsstab und dem Führungselement vor Verunreinigungen durch Partikel geschützt werden.

Bevorzugt ist zwischen dem Führungsabschnitt des Ventilschließgliedes und der Hülse des Führungselementes gemäß der zweiten Alternative eine axial verschiebbare Dichtung vorgesehen. Dies weist den Vorteil auf, dass der Innenraum der Hülse und des Führungsabschnitts des Ventilschließgliedes gegenüber dem Strömungskanal abgedichtet ist, der das Ventilschließglied mit dem zylinderförmigen Führungsabschnitt und die Hülse außen umströmt.

Vorteilhafterweise ist in dem Führungsabschnitt des Ventilschließgliedes und der Hülse des Führungselementes das Kraftspeicherelement angeordnet. Der Boden des Führungselements ist bevorzugt geschlossen. Dadurch kommt das Kraftspeicherelement mit dem Medium, welches das Rückschlagventil durchströmt, nicht in Kontakt. Insbesondere bei der abdichtenden Anordnung des Führungsabschnitts des Ventilschließglieds zur Hülse des Führungselementes ist das Kraftspeicherelement von dem Medium getrennt. Dadurch kann die Funktionsdauer des Kraftspeicherelements erhöht werden auch für den Fall, dass aggressive Medien das Rückschlagventil durchströmen. Zudem ist ein gleichbleibendes Ansprechverhalten des Kraftspeicherelements gegeben, da eine Temperaturbeeinflussung durch das Medium auf das Kraftspeicherelement nahezu nicht gegeben ist.

Alternativ kann außerhalb des Führungsabschnitts des Ventilschließgliedes und außerhalb des Führungselementes der Hülse das Kraftspeicherelement angeordnet sein.

Das Rückschlagventil gemäß einer der vorgenannten Ausführungsformen kann in eine Auslassöffnung einer zweiten Durchgangsbohrung einer Anschlusseinrichtung für einen inneren Wärmetausch einsetzbar sein. Dadurch kann das Rückschlagventil vor der Montage des inneren Wärmetauschers in die Anschlusseinrichtung oder ein inneres Rohr des Wärmetauschers einsetzbar sein, sodass eine zusätzliche Schnittstelle und somit Leckagestelle nicht gegeben ist.

Eine weitere Verwendung des Rückschlagventils nach einer der vorbeschriebenen Ausführungsformen sieht vor, dass das Rückschlagventil in ein inneres Rohr eines inneren Wärmetauschers einsetzbar ist, der aus dem inneren und einem äußeren Rohr, welches das innere Rohr umgibt, besteht.

Eine weitere Verwendung des Rückschlagventils, welches nach einem der vorbeschriebenen Ausführungsformen ausgebildet ist, kann in einem Anschlussflansch eines Sammlers, insbesondere eines Kältemittelsammlers, sein.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine schematische Darstellung eines Kältekreislaufs,
Figur 2 eine schematische Schnittansicht einer Anschlusseinrichtung mit einem Rückschlagventil, das nicht Teil der Erfindung ist,
Figur 3 eine schematisch vergrößerte Schnittansicht des Rückschlagventils,
Figur 4 eine schematische Schnittansicht entlang der Linie III-III in Figur 3, und
Figur 5 eine perspektivische Ansicht einer alternativen Ausführungsform des Rückschlagventils, das nicht Teil der Erfindung ist, zu Figur 3,
Figur 6 eine schematische Schnittansicht des Rückschlagventils gemäß Figur 5,
Figur 7 eine Ansicht auf ein Grundgehäuse des Rückschlagventils gemäß Figur 5,
Figur 8 eine schematische Schnittansicht des Rückschlagventils gemäß Figur 5 in einer ersten Einbausituation,
Figur 9 eine schematische Schnittansicht des Rückschlagventils gemäß Figur 5 mit einem Ventilgehäuse in einer weiteren Einbausituation,
Figur 10 eine perspektivische Ansicht auf eine Anschlussöffnung einer alternativen erfindungsgemäßen Ausführungsform eines Rückschlagventils,
Figur 11 eine perspektivische Rückansicht des Rückschlagventils gemäß Figur 10,
Figur 12 eine schematische Schnittansicht der alternativen Ausführungsform des Rückschlagventils gemäß Figur 10 in einer Ausgangsposition, und
Figur 13 eine schematische Schnittansicht der alternativen Ausführungsform des Rückschlagventils gemäß Figur 10 in einer Arbeitsposition.

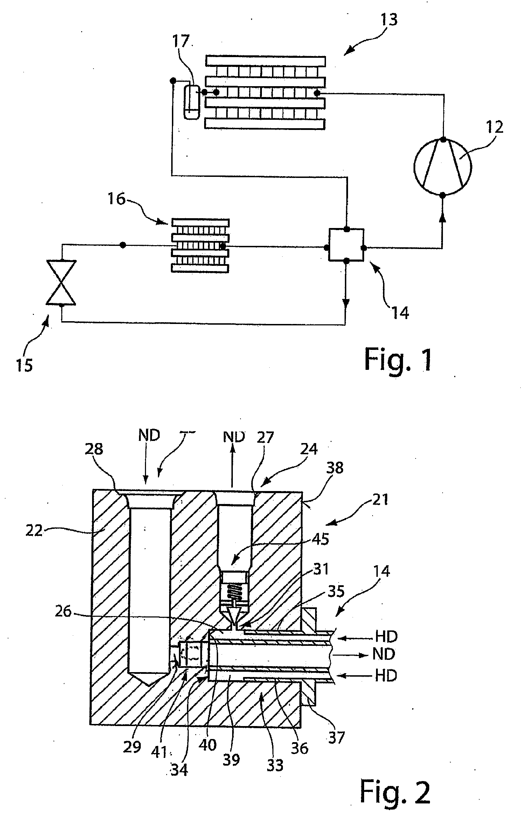

Figur 1 zeigt einen konventionellen Aufbau eines Kälte- beziehungsweise Wärmekreislaufs 11, insbesondere einer Klimaanlage, welche vorzugsweise in Kraftfahrzeugen eingesetzt wird. In einem Verdichter 12 wird ein Kältemittel komprimiert. Dies kann beispielsweise R134A, R1234yf oder CO₂ sein. Das komprimierte Kältemittel wird einem Kondensator 13 zugeführt, wobei ein Wärmeaustausch zwischen dem komprimierten Kältemittel und der Umgebung stattfindet, um das Kältemittel zu kühlen. Dem Kondensator 13 nachgeordnet kann ein Akkumulator 17 beziehungsweise Sammler vorgesehen sein, um Kältemittel der Gasphase und der Flüssigphase zu trennen und gleichzeitig flüssiges Kältemittel zu sammeln. Das den Kondensator 13 beziehungsweise Akkumulator 17 verlassende Kältemittel gelangt an einen inneren Wärmetauscher 14. Zwischen dem inneren Wärmetauscher 14 und einem Wärmeüberträger 16 ist ein Expansionsventil 15 vorgesehen. Durch das Expansionsventil 15 wird der Massenstrom des Kälte- beziehungsweise Wärmekreislaufs 11 in Abhängigkeit der anstehenden Druckdifferenz geregelt. Das unter Hochdruck stehende Kältemittel wird durch das Expansionsventil 15 expandiert und gelangt niederdruckseitig zum Wärmeüberträger 16. Aus dem Wärmeüberträger 16 nimmt das Kältemittel Wärme aus der Umgebung auf. Von dort aus wird das Kältemittel über den inneren Wärmetauscher wieder dem Verdichter 12 zugeführt.

Beim Einsatz einer nachfolgend beschriebenen Anschlusseinrichtung 21 gemäß Figur 2 bei einem solchen Kältekreislauf ist dahingehend beim Aufbau des Kältekreislaufs 11 gemäß Figur 2 eine Abweichung gegeben, dass das Expansionsventil 15 nicht separat in einem Leitungsabschnitt zwischen dem inneren Wärmetauscher 14 und dem Wärmeüberträger 16 angeordnet ist, sondern beispielsweise in einen Anschlussblock 22 integriert ist.

Die Anschlusseinrichtung 21 gemäß Figur 2 umfasst eine Einlassöffnung 26 einer ersten Durchgangsbohrung 24, die über eine Drosselstelle 35 zu einer Auslassöffnung 27 führt. Diese Auslassöffnung 27 ist mit einem Eingang des Wärmeüberträgers 16 verbunden. Benachbart dazu ist eine zweite Durchgangsbohrung 25 in der Anschlusseinrichtung 21 vorgesehen. Eine Einlassöffnung 28, welche mit einem Ausgang des Wärmeüberträgers 16 in Verbindung steht, nimmt das vom Wärmeüberträger 14 kommende Kältemittel auf und führt es einer Auslassöffnung 29 der zweiten Durchgangsbohrung zu. Die Einlassöffnung 26 der ersten Durchgangsbohrung 24 und die Auslassöffnung 29 der zweiten Durchgangsbohrung 25 sind in einer gemeinsamen Anschlussbohrung 33 vorgesehen. In diese gemeinsame Anschlussbohrung 33 ist ein Endabschnitt eines inneren Wärmetauschers 14 einsetzbar. Dieser innere Wärmetauscher 14 weist ein Außenrohr 36 auf, dessen Außenumfang am Bohrungsabschnitt 35 der Anschlussbohrung 33 anliegt und sich zumindest teilweise in die Anschlussbohrung 33 hinein erstreckt. In dem Außenrohr 36 ist bevorzugt ein Ringbund 37 oder ein Flansch oder eine sonstige Anschlussstelle vorgesehen, welche an dem Anschlussblock 22 anliegt und den inneren Wärmetauscher 14 zum Anschlussblock 22 fixiert.

Das Außenrohr 36 des inneren Wärmetauschers 14 erstreckt sich nahe oder bis zur Querschnittsverengung 31, ohne diese zu überdecken. Ein Innenrohr 39 des inneren Wärmetauschers 14 ragt gegenüber dem Außenrohr 36 hervor und liegt bevorzugt an einer Stirnfläche 40 an, die im Übergangsbereich 34 zwischen der Auslassöffnung 29 und dem Bohrungsabschnitt 35 gebildet ist. Durch eine solche Anordnung wird die Einlassöffnung 26 der ersten Durchgangsbohrung 24 durch einen Ringkanal zwischen dem Innenrohr 39 und dem Bohrungsabschnitt 35 der Anschlussbohrung 33 gebildet.

Bei dieser Anschlusseinrichtung 21 ist der Querschnittsverengung 31 in Strömungsrichtung des Kältemittels gesehen beispielsweise ein Expansionsventil 45 nachgeschalten.

In der Auslassöffnung 29 der zweiten Durchgangsbohrung 25 des Anschlussblocks 22 kann ein Rückschlagventil 41 einsetzbar sein. Alternativ kann ein Rückschlagventil 41 auch in ein Ende des inneren Rohres 39 des inneren Wärmetauschers 14 einsetzbar sein. In beiden Fällen grenzt das Rückschlagventil 41 an die Stirnfläche 40 an oder ist benachbart dazu angeordnet. Eine zusätzliche Schnittstelle wird dadurch nicht gebildet.

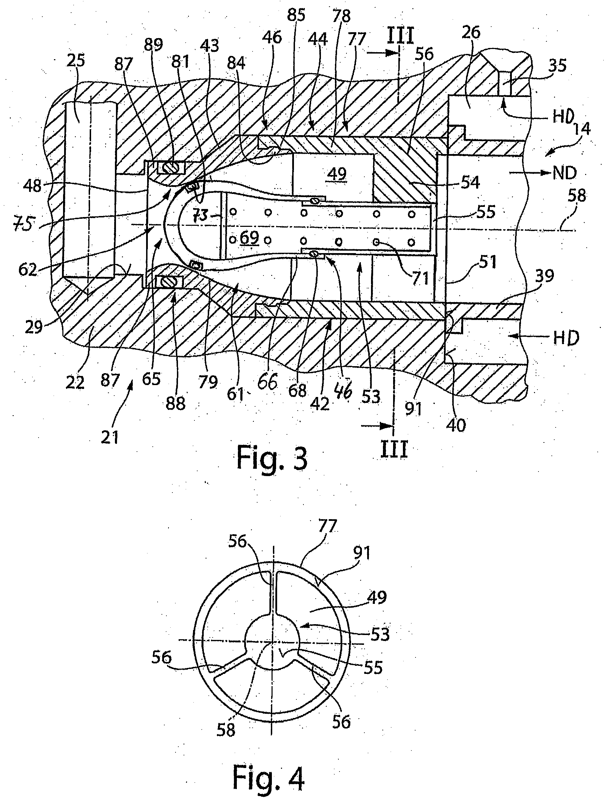

In Figur 3 ist eine schematisch vergrößerte Ansicht des nicht erfindungsgemäßen Rückschlagventils 41 dargestellt, welches beispielsweise in die Auslassöffnung 29 der zweiten Durchgangsbohrung 25 des Anschlussblocks 22 eingesetzt ist. Es versteht sich, dass dieses Rückschlagventil 41 auch in jeden weiteren Öffnungsquerschnitt einsetzbar ist, der zur Führung und Durchströmung von einem Medium vorgesehen ist.

Die Strömungsrichtung des Mediums ist vor der Einlassöffnung 28 der zweiten Durchgangsbohrung 25 durch die Auslassöffnung 29 hindurch in den inneren Wärmetauscher 14, insbesondere das innere Rohr 39.

Das Rückschlagventil 41 umfasst ein Gehäuse 42, welches im Ausführungsbeispiel zweiteilig ausgebildet ist. Alternativ kann dies auch mehrteilig ausgebildet sein. Das Gehäuse 42 besteht aus einem Ventilgehäuse 43 und einem Grundgehäuse 44, die über eine gemeinsame Schnittstelle 46 miteinander verbunden sind. An dem Ventilgehäuse 43 ist eine Zuführöffnung 48 vorgesehen, die durch einen Strömungskanal 49 im Gehäuse 42 mit einer Abführöffnung 51 am Grundgehäuse 44 verbunden ist. Nahe der Abführöffnung 51 ist ein Führungselement 53 in dem Grundgehäuse 44 vorgesehen. Dieses Führungselement 53 besteht aus einer Hülse 54 mit einem Boden 55, der zur Abführöffnung 51 ausgerichtet ist. Das Führungselement 53 ist durch Längsrippen 56 oder durch Stege zur Längsmittelachse 58 des Gehäuses 42 ausgerichtet.

In Figur 4 ist eine schematische Schnittansicht entlang der Linie III-III in Figur 3 dargestellt. Aus dieser Schnittansicht geht die beispielhafte Ausrichtung und Anordnung der Längsrippen 56 zwischen dem Grundgehäuse 44 und dem Führungselement 53 hervor. Durch wenigstens drei vorzugsweise in gleichem Abstand zueinander ausgerichtete Längsrippen 56 kann eine steife Anordnung und Aufnahme des Führungselementes 53 in dem Grundgehäuse 44 geschaffen sein.

Wie aus Figur 3 in der Schnittansicht des Weiteren hervorgeht, weist das Führungselement 53 ein offenes Ende auf, welches zur Zuführöffnung 48 ausgerichtet ist. An dem Führungselement 53 ist ein Ventilschließglied 61 verschiebbar vorgesehen. In Figur 3 ist das Ventilschließglied 61 in einer Ausgangsposition 62 beziehungsweise Schließposition dargestellt. Bei einer Verschiebebewegung des Ventilschließgliedes 61 in Richtung auf die Abführöffnung 51 wird dieses in eine Arbeitsposition übergeführt, wodurch der Strömungskanal 49 in Abhängigkeit der Verschiebebewegung des Ventilschließglieds 61 freigegeben ist.

Bei diesem Ausführungsbeispiel umfasst das Ventilschließglied 61 einen kugelförmigen oder patronenförmigen Schließkörper 65, an welchen sich in Richtung auf die Abführöffnung 51 ausgerichtet ein Führungsabschnitt 66 anschließt. Dieser Führungsabschnitt 66 umgreift die Hülse 54. Vorzugsweise können zwischen dem Führungsabschnitt 66 und der Hülse 54 Führungsrippen sein. Insbesondere ist zwischen dem Führungsabschnitt 66 und der Hülse 54 eine axiale verschiebbare Dichtung 68 vorgesehen. Diese axial verschiebbare Dichtung 68 kann als Dichtungsring beispielsweise mit einem rechteckförmigen Querschnitt ausgebildet sein.

Durch die Positionierung des Ventilschließgliedes 61 zum Führungselement 53 ist ein Innenraum 69 innerhalb des Führungsabschnitts 66 und der Hülse 54 geschaffen, der gegenüber einem Medium, welches den Strömungskanal 49 durchströmt, abgeschlossen ist. In diesem Innenraum 69 ist ein Kraftspeicherelement 71 angeordnet. Dieses Kraftspeicherelement 71 stützt sich einerseits am Boden 55 des Führungselementes 53 sowie andererseits an einer Stützfläche 73 am Schließkörper 65 des Ventilschließgliedes 61 ab. Somit kann dieses Kraftspeicherelement 71 im Wesentlichen ohne eine Beeinflussung des das Rückschlagventil 41 durchströmenden Mediums arbeiten. Zudem wird dadurch ein nahezu verwirbelungsfreier Strömungskanal 49 geschaffen, da das Kraftspeicherelement 71, welches insbesondere als eine Spiral- beziehungsweise Druckfeder ausgebildet ist, sich nicht innerhalb des Strömungskanals 49 erstreckt. Gleichzeitig kann durch das Übergreifen des Führungsabschnitts 66 des Ventilschließgliedes 61 über das Führungselement 53 eine strömungsgünstige Anordnung geschaffen sein.

Das Ventilgehäuse 43 umfasst die Zuführöffnung 48, welche im Durchflussquerschnitt kleiner als die Abführöffnung 51 am Grundgehäuse 44 ausgebildet ist. Von der Zuführöffnung 48 des Ventilgehäuses 43 ausgehend erfolgt eine zunehmende Einschnürung beziehungsweise Verengung des Durchflussquerschnittes zur Bildung eines Ventilsitzes 75. Darauffolgend weitet sich der Strömungskanal 49 innerhalb des Ventilgehäuses 43 auf und mündet in einen zylindrischen Abschnitt 77 im Grundgehäuse 44. Der Schließkörper 65 liegt in der Ausgangsposition 62 des Ventilschließgliedes 61 abdichtend an dem Ventilsitz 75 an. Der auf den Schließkörper 65 wirkenden Kraft durch das Kraftspeicherelement 71 wirkt der Ventilsitz 75 entgegen. Der Schließkörper 65 weist stromab zum Ventilsitz 75 eine ringförmige Vertiefung 79 auf, in welcher ein Dichtungselement 81, insbesondere eine O-Ring-Dichtung, eingesetzt ist. In der Ausgangsposition 62 des Ventilschließgliedes 61 zum Ventilsitz 75 wirkt dieses Dichtungselement 81 abdichtend. Dabei liegt das Dichtungselement 81 abdichtend an, wobei die Schließkraft durch das Kraftspeicherelement 71 durch den im Ventilsitz 75 anliegenden Schließkörper 65 aufgenommen ist.

Die Schnittstelle 46 zwischen dem Ventilgehäuse 43 und dem Grundgehäuse 44 ist gemäß der dargestellten Ausführungsform in Figur 3 als eine Rastverbindung ausgebildet. Dabei ist ein Anschlussabschnitt 84 des Ventilgehäuses 43 innenliegend zum Anschlussabschnitt 85 des Grundgehäuses 44 ausgebildet. Dies weist den Vorteil auf, dass durch die Druckkräfte im Strömungskanal 49, die auch radial wirken, der Anschlussabschnitt 84 des Ventilgehäuses 43 gegen den Anschlussabschnitt 85 am Grundgehäuse 44 gedrückt wird, wodurch der Formschluss erhöht wird, da die Innenwand der Auslassöffnung 29 ein steifes Gegenlager bildet. Somit kann eine zusätzliche Abdichtungswirkung an dieser Schnittstelle 46 geschaffen sein.

Zur Abdichtung zwischen dem Gehäuse 42 des Rückschlagventils 41 und der Auslassöffnung 29 des Anschlussblocks 22 oder eines sonstigen Rohres ist an einem Außenumfang des Ventilgehäuses 43 eine Einschnürung 88 vorgesehen. Diese dient zur Aufnahme eines Dichtungselements 89, um eine Abdichtung zu erzielen.

Des Weiteren schließt an die Einschnürung 88 ein Ringbund 87 an. Dieser dient zur definierten Anlage und Positionierung des Rückschlagventils zum Einbauort.

Das Rückschlagventil 41 ist beispielsweise durch das innere Rohr 49 des Wärmetauschers 14 in der Anschlussöffnung 29 fixiert gehalten. Das innere Rohr 49 kann mit dessen Stirnseite unmittelbar an einer Stirnseite 91 des Grundgehäuses 44 angreifen. Bevorzugt ist ein Innendurchmesser des zylindrischen Abschnitts 77 des Grundgehäuses 44 an den Innenquerschnitt des inneren Rohres 49 des inneren Wärmetauschers 14 angepasst oder umgekehrt, sodass vorzugsweise ein stufenloser Übergang geschaffen werden kann.

In Fällen, in denen das innere Rohr 39 im Durchmesser kleiner ist als der zylindrische Abschnitt 77 des Grundgehäuses 44, kann vorgesehen sein, dass der zylindrische Abschnitt 77 des Grundgehäuses 44 sich zur Abführöffnung 51 hin verjüngt und die Abführöffnung 51 im Querschnitt dem Innenquerschnitt des inneren Rohres 39 oder einem weiteren Anschlusselement entspricht.

Bevorzugt ist ein stufenloser Übergang vom Grundgehäuse 44 zum benachbarten Anschlusselement, wie beispielsweise dem inneren Rohr 39 des inneren Wärmetauschers 14, vorgesehen. Sofern der Durchmesser des Anschlusselements kleiner als der Durchmesser des zylindrischen Abschnitts 77 des Grundgehäuses 44 ist, kann das Führungselement 53 einen größeren Abstand zur Abführöffnung 51 aufweisen, das heißt, der Boden 55 ist in Richtung auf die Zuführöffnung 48 versetzt, sodass ein hinreichend großer Strömungsquerschnitt des Strömungskanales 59 bei der Verjüngung eines Endabschnitts des Grundgehäuses 44 aufrechterhalten wird.

Das Rückschlagventil 41 gemäß dem Ausführungsbeispiel besteht aus drei Bauteilen, die insbesondere durch ein Spritzgussverfahren kostengünstig herstellbar sind. Hierbei handelt es sich um das Grundgehäuse 44 mit dem vorzugsweise einteilig daran vorgesehenen Führungselement 53 sowie dem Ventilschließglied 61 als auch dem Ventilgehäuse 43. Zur Komplettierung des Rückschlagventils 41 sind das Kraftspeicherelement 71 sowie eine axial verschiebbare Dichtung 68 als auch das Dichtungselement 81 am Schließkörper 65 des Ventilschließgliedes und das Dichtungselement 89 am Ventilgehäuse 43 vorgesehen. Somit ist ein konstruktiv einfacher Aufbau eines solchen Rückschlagventils 41 gegeben.

Auch ist dieses Rückschlagventil 41 in einfacher Weise montierbar. Das Kraftspeicherelement 71 wird in das Führungselement 53 des Grundgehäuses 44 eingesetzt. Anschließend wird das Ventilschließglied 61, sofern eine Dichtung 68 vorgesehen ist, unter Zwischenschaltung der axialen Dichtung 68 zum Führungselement 53 positioniert. Das Dichtungselement 81 wird bevorzugt vor dem Positionieren des Ventilschließgliedes 61 auf dem Führungselement 53 am Schließkörper 65 angebracht. Dies kann auch danach erfolgen. Anschließend wird das Ventilgehäuse 43 zum Grundgehäuse 44 ausgerichtet und durch die Schnittstelle 46 miteinander verbunden. Bei der Ausbildung der Schnittstelle 46 als Rastverbindung genügt ein Aufstecken. Ergänzend wird noch das Dichtungselement 89 zum Ringbund 87 am Ventilgehäuse 43 beziehungsweise in der Einschnürung 88 positioniert. Danach ist das Rückschlagventil 41 zum Einbau fertiggestellt.

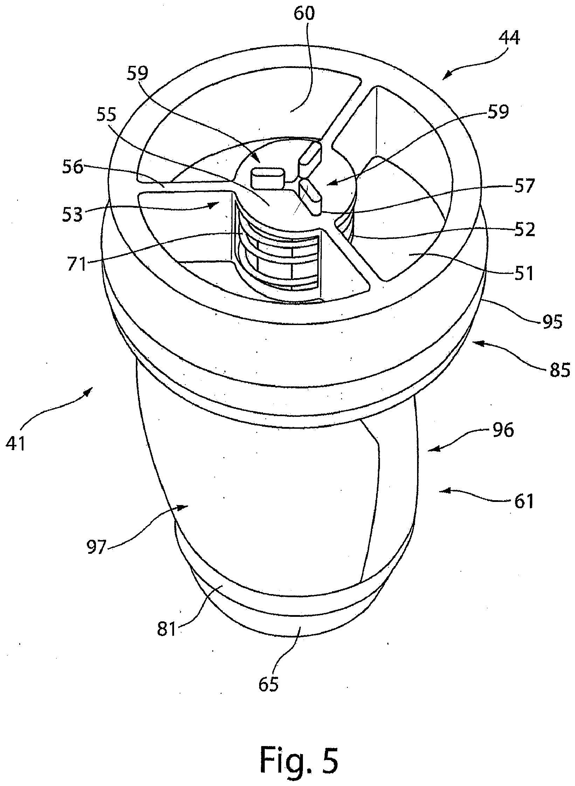

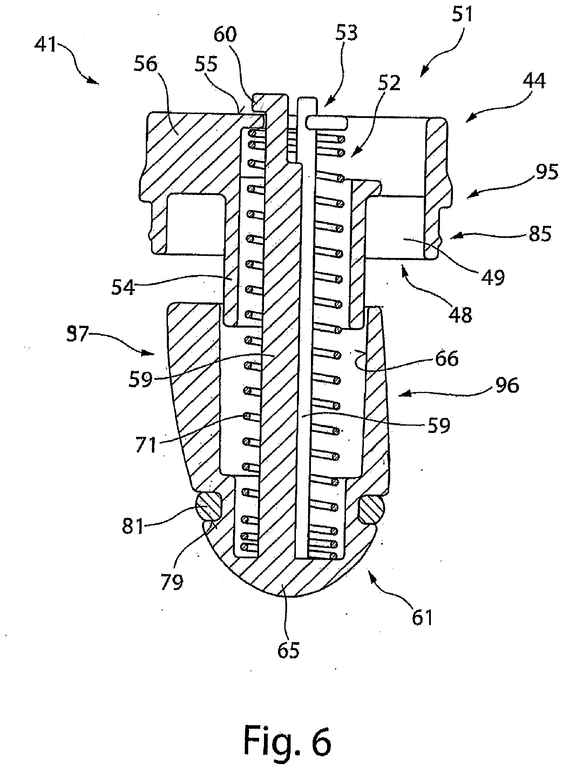

In Figur 5 ist eine alternative nicht erfindungsgemäße Ausführungsform des Rückschlagventils 41 zur Figur 3 dargestellt. Die Figur 6 zeigt eine schematische Schnittansicht des Rückschlagventils 41 gemäß Figur 5. Sofern die Komponenten baugleich sind, wird auf die Figuren 3 und 4 Bezug genommen.

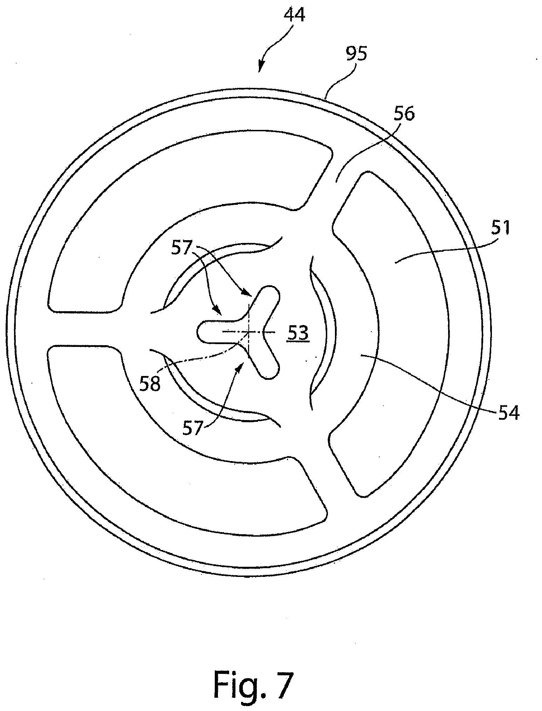

Dieses Rückschlagventil 41 umfasst ein Grundgehäuse 44, welches ringförmig ausgebildet ist. Im mittleren Bereich des Grundgehäuses 44 ist das Führungselement 53 vorgesehen. Dieses ist beispielsweise zumindest durch eine Längsrippe 56, vorzugsweise durch drei Längsrippen 56, aufgenommen. Dieses Führungselement 53 kann eine Hülse 54 umfassen, welche im Schnitt in Figur 6 dargestellt ist. Zwischen der Hülse 54 und dem Führungselement 53 können Aussparungen 52 vorgesehen sein. Das Führungselement 53 umfasst zumindest eine Durchbrechung 57, vorzugsweise drei Durchbrechungen 57, die miteinander in Verbindung stehen. Zur besseren Darstellung der Durchbrechungen 57 im Führungselement 53 ist eine Draufsicht in Figur 7 dargestellt. Die Durchbrechungen 57 sind beispielsweise sternenförmig zueinander ausgerichtet. Vorzugsweise liegen die Durchbrechungen 57 in Längserstreckung zu den Längsrippen 56.

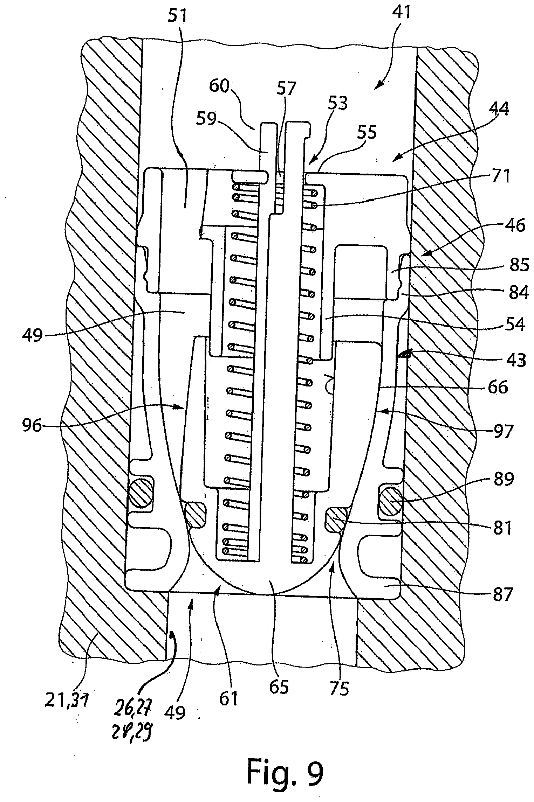

Das Grundgehäuse 44 kann eine umlaufende Schulter 95 aufweisen, durch welche ein radial nach außen gerichteter Vorsprung geschaffen wird. Dieser kann beispielsweise als Anschlag für einen definierten Einbau des Rückschlagventils 41 dienen. Das Grundgehäuse 44 kann des Weiteren einen Anschlussabschnitt 85 aufweisen. Dieser kann dazu dienen, dass ein Ventilgehäuse 43 mit einem daran angeordneten Anschlussabschnitt 84 zum Grundgehäuse 44 befestigbar ist. Diese Anordnung des Ventilgehäuses 43 zum Grundgehäuse 44 ist beispielsweise in Figur 9 dargestellt.

Aus der Schnittansicht gemäß Figur 6 geht hervor, dass sich innerhalb des Ventilschließgliedes 61 zumindest ein Führungsstab 59 erstreckt. Dieser Führungsstab 59 erstreckt sich vom Schließkörper 65 in Richtung auf das Grundgehäuse 44. Am Ende des Führungsstabes 59 ist ein Sperrelement 60 vorgesehen. Dieses Sperrelement 60 ist radial nach außen gerichtet. Der Führungsstab 59 weist eine Abmessung im Querschnitt auf, sodass dieser in der Durchbrechung 57 geführt ist. Vorteilhafterweise sind drei Führungsstäbe 59 sternförmig zueinander ausgerichtet. Zum Verbinden des Ventilschließgliedes 61 mit dem Grundgehäuse 44 werden die Führungsstäbe 59 aufeinander zubewegt, sodass die Sperrelemente 60 durch die Durchbrechungen 57 hindurchführbar sind. Anschließend kehren die Führungsstäbe 59 in ihre Ausgangsposition zurück. Durch das zwischen dem Grundgehäuse 44 und dem Ventilschließglied 61 wirkende Kraftspeicherelement 71 wird das Ventilschließglied 61 in eine Ausgangsposition 62 zum Grundgehäuse 44 positioniert. Die Verschiebebewegung relativ zum Grundgehäuse 44 des Ventilschließgliedes 61 wird durch das jeweilige Sperrelement 60 des zumindest einen Führungsstabe 59 begrenzt. Dieses Sperrelement 60 liegt an einer Außenseite des Bodens 55 am Führungselement 53 an und begrenzt die Verschiebebewegung.

In dieser Ausgangsposition 62 kann das Kraftspeicherelement 71 zwischen dem Grundgehäuse 44 und dem Ventilschließglied 61 vorgespannt sein. Dadurch kann eine Öffnungskraft des Ventilschließgliedes 61 einstellbar sein. Auch kann eine schnellere Schließbewegung aus einer Arbeitsposition in eine Ausgangsposition 62 erzielt werden.

Zwischen einem Führungsabschnitt 66 des Ventilschließgliedes 61 und der Hülse 54 des Führungselementes 53 ist eine axiale Führung gebildet. Vorzugsweise kann analog zur Ausführungsform gemäß Figur 3 eine axial verschiebbare Dichtung 68 zwischen dem Führungsabschnitt 66 und der Hülse 54 vorgesehen sein. Das Ventilschließglied 61 weist benachbart zum Ventilsitz 75 eine Vertiefung 79 auf, in welcher das Dichtungselement 81 angeordnet ist. Diese Ausführungen und Funktionen entsprechen der Ausführungsform gemäß Figur 3 und gelten auch für diese Ausführungsform.

Der Schließkörper 65 des Ventilschließgliedes 61 kann sich in einem Bereich zwischen dem Dichtelement 81 und dem Grundgehäuse 44 asymmetrisch erstrecken. Beispielsweise kann eine einseitige Abflachung 96 vorgesehen sein, welche einem gekrümmten Verlauf 97 gegenüberliegt. Der gekrümmte Verlauf 97 des Schließkörpers 65 kann einem strömungsgünstigen Verlauf aufweisen. Durch die einseitige Abflachung 96 kann ein vergrößertes Strömungsvolumen erzielt werden. Alternativ kann der Schließkörper 65 in der Kontur in dem Verlauf auch dem Ventilschließglied 61 gemäß Figur 3 entsprechen.

Durch den zumindest einen Führungsstab 59 kann eine zusätzliche Führung für das innenliegende Kraftspeicherelement 71 gegeben sein. Das Kraftspeicherelement 71 ist bevorzugt innerhalb der Hülse 54 des Führungselementes 53 und dem Führungsabschnitt 66 vorgesehen.

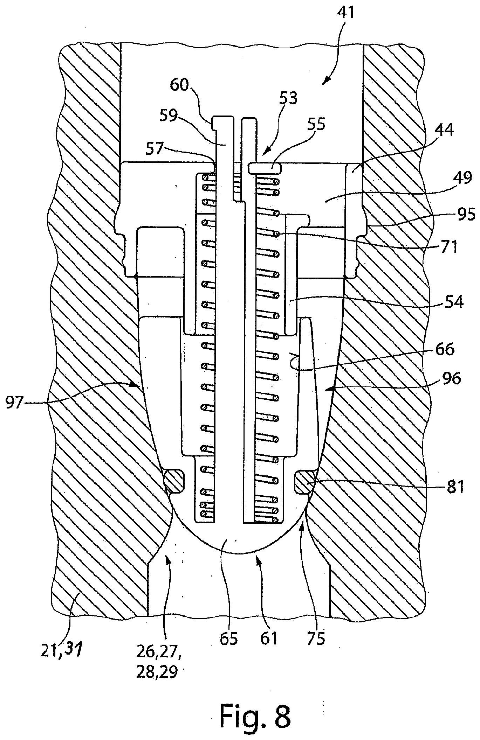

In Figur 8 ist eine schematische Ansicht des Rückschlagventils 41 gemäß Figur 6 in einer ersten Einbausituation dargestellt. Bei dieser Ausführungsform ist eine Anschlussöffnung der Anschlusseinrichtung 21 oder eines Rohres 39 dargestellt. Die Anschlussöffnung kann eine Auslassöffnung und/oder Einlassöffnung 26 27, 28, 29 sein.

Das Grundgehäuse 44 liegt an einer Stufe in der Anschlussöffnung der Anschlusseinrichtung 21 mit der Schulter 95 an. Dadurch nimmt das Rückschlagventil 41 eine definierte Lage innerhalb der Anschlussöffnung ein. Das Rückschlagelement 41 kann dabei mit einer definierten Vorspannkraft des Kraftspeicherelements 71 eingebaut sein. In diesem Fall ist das Kraftspeicherelement 71 zwischen dem Ventilschließglied 61 und dem Grundgehäuse 44 mit einer Druckkraft beaufschlagt und entspricht bevorzugt der Schließkraft des Ventilschließgliedes 61.Ein Ventilsitz 75 ist durch eine Verengung der Anschlussöffnung gebildet. An diesem Ventilsitz 75 liegt der Schließkörper 65 als auch die Dichtung 81 des Ventilschließgliedes 61 an. In der in Figur 8 dargestellten Ausgangsposition 62 ist das Rückschlagventil 41 geschlossen.

Durch die Veränderung des Abstandes zwischen dem Ventilsitz 75 und dem Grundgehäuse 44 des Rückschlagventils 11 in der Anschlussöffnung der Anschlusseinrichtung 21 ist die Vorspannung des Kraftspeicherelements 71 einstellbar.

Bei einer Druckbeaufschlagung auf das Ventilschließglied 61 durch ein Medium wird das Ventilschließglied 6, vorzugsweise nach Überwindung der eingestellten Vorspannkraft in Richtung auf das Grundgehäuse 44 verfahren. Dadurch hebt der Schließkörper 65 des Ventilschließgliedes 61 vom Ventilsitz 75 ab, und das Medium kann in Richtung auf das Grundgehäuse 44 strömen und gelangt durch den zumindest einen Strömungskanal 49 durch die Abführöffnung 51 hindurch.

In Figur 9 ist eine schematische Schnittansicht des Rückschlagventils 41 gemäß Figur 6 dargestellt, welches zusätzlich ein Ventilgehäuse 43 umfasst. Das Ventilgehäuse 43 umfasst den Anschlussabschnitt 84, der an dem Anschlussabschnitt 85 angreift. Der Anschlussabschnitt 85 ist bevorzugt außenumgreifend zum Anschlussabschnitt 84 vorgesehen. Alternativ kann auch eine vertauschte Anordnung vorgesehen sein. Bei dieser Anschlussschnittstelle 46 kann eine Steck-, Rast-, Schnapp-, Press- oder Schraubverbindung vorgesehen sein. Sie kann lösbar oder unlösbar sein.

Durch die Länge des Ventilgehäuses 43 oder dem Abstand des Ventilsitzes 75 zur Schnittstelle 84 oder zum Grundgehäuse 44 kann eine auf das Kraftspeicherelement 71 wirkende Vorspannkraft bestimmt sein.

Das Ventilgehäuse 43 weist ausgehend von dem Grundgehäuse 44 einen Innenwandabschnitt auf, der sich im Querschnitt vorzugsweise kontinuierlich bis zum Ventilsitz 75 verjüngt, um eine Einschnürung 88 zu bilden. Daran anschließend wird der innere Querschnitt des Ventilgehäuses 43 wieder zunehmend vergrößert.

Am Außenumfang des Ventilgehäuses 43 ist eine vertiefte Aufnahme für ein weiteres Dichtungselement 89 zur Abdichtung der Anschlussstelle in der Anschlusseinrichtung 21 vorgesehen.

Ein stirnseitiger Ringbund 87 des Ventilgehäuses 43 liegt an einer Schulter der Anschlusseinrichtung 21 an. Dadurch kann eine definierte Einbausituation des Rückschlagventils 41 zur Anschlussöffnung in die Anschlusseinrichtung 21 oder dem Rohr 39 gegeben sein.

Die Funktionsweise und der Aufbau des Rückschlagventils 41 entspricht dem Rückschlagventil 41, welches in den Figuren 5 bis 8 beschrieben ist.

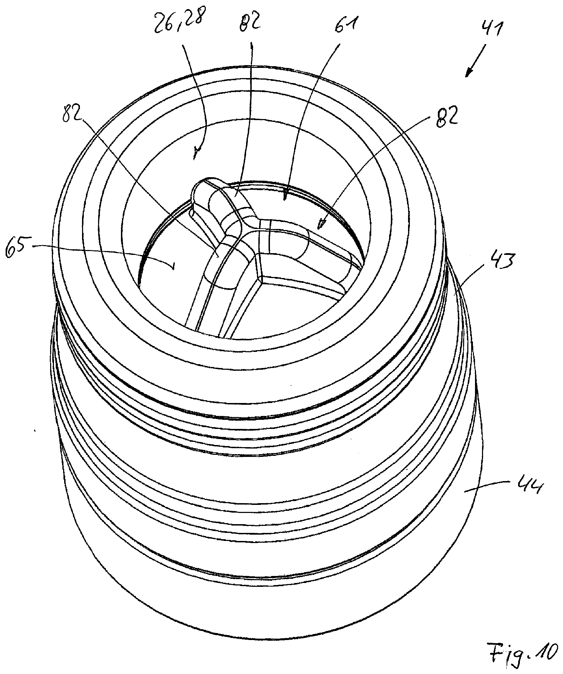

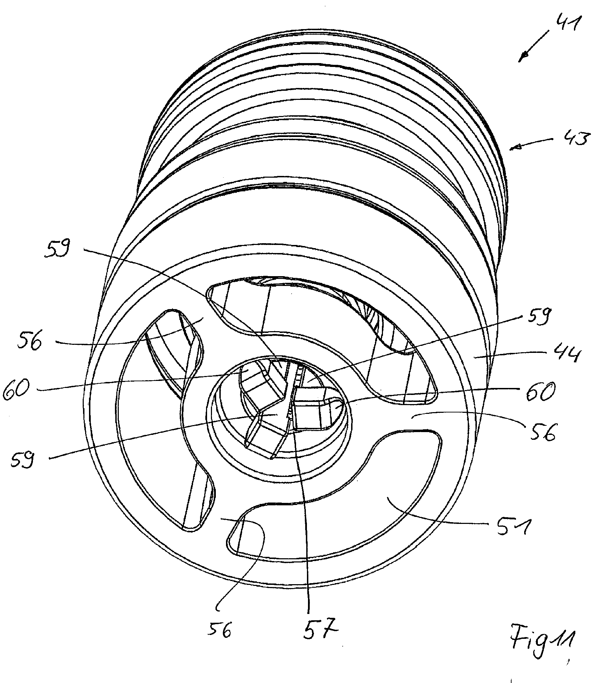

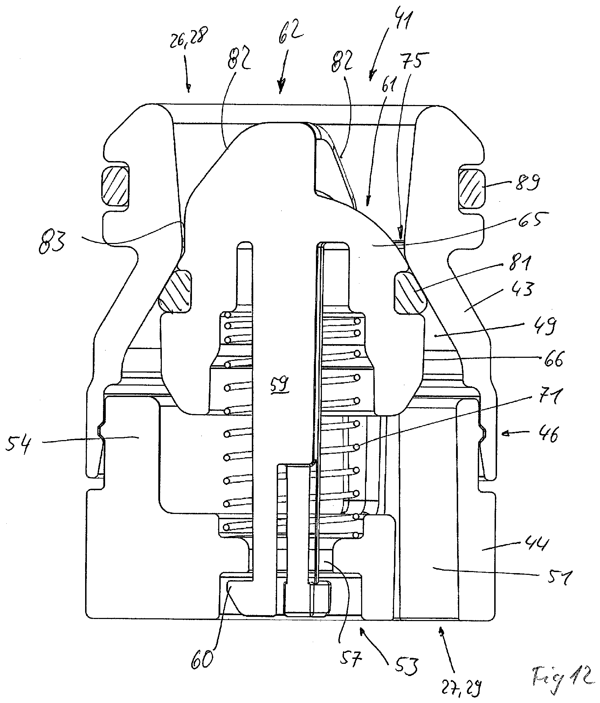

In den Figuren 10 bis 13 ist eine erfindungsgemäße Ausführungsform des Rückschlagventils 41 zu der Ausführungsform gemäß Figur 9 dargestellt.

Diese Ausführungsform des Rückschlagventils 41 gemäß den Figuren 10 bis 13 umfasst ein Grundgehäuse 44 zur Aufnahme des Ventilschließgliedes 61 mit den Führungsstäben 59, welche in dem zumindest einen Führungselement 53 geführt sind, gemäß den Figuren 5 bis 7. Des Weiteren kann das Rückschlagventil 21 ein Ventilgehäuse 43 umfassen, welches durch die lösbare Schnittstelle 46 mit dem Grundgehäuse 44 verbindbar ist. Diesbezüglich wird auf die Figur 9 Bezug genommen.

Bei dieser in den Figuren 10 bis 13 dargestellten erfindungsgemäßen Ausführungsform weist die Ausgestaltung des Schließkörpers 65 des Ventilschließgliedes 61 von der in Figur 9 dargestellten Ausführungsform ab. An dem Ventilschließglied 61 ist ebenfalls ein Dichtungselement 81 vorgesehen, welches abdichtend an einem Ventilsitz 75 anliegt. Dieser Ventilsitz 75 ist bevorzugt in Form eines Konus ausgebildet, der sich in Strömungsrichtung von der Einlassöffnung 26, 28 zur Auslassöffnung 27, 29 aufweitet. Dadurch wird der Strömungskanal 49 im Querschnitt vergrößert. Dies weist den Vorteil auf, dass die Strömungsgeschwindigkeit des Mediums mit zunehmender Querschnittsfläche verringert und dadurch die Strömungsdruckverluste vermindert werden können.

Zur Einlassöffnung 26, 28 weisend sind an dem Schließkörper 65 Führungsrippen 82 vorgesehen. Diese Führungsrippen 82 sind beispielsweise sternförmig ausgerichtet und gehen in einer Längsmittelachse 58 ineinander über. Die Führungsrippen 82 weisen ausgehend von der Längsmittelachse 58 einen gekrümmten Verlauf auf und gehen bündig in den Schließkörper 65 über, wobei im Übergangsbereich Führungsflächen 83 gebildet sind. Durch diese Führungsflächen 83 ist das Ventilschließglied 61 in einer Ausgangsposition 62 innerhalb des Ventilsitzes 75 geführt. Diese Führungsflächen 83 wirken auch als Führung in einer ersten Öffnungsphase des Ventilschließgliedes 61 gegenüber dem Ventilsitz 75, so dass eine axiale Führung des Ventilschließgliedes 61 während einer ersten Öffnungsphase gegeben ist. Gleichzeitig wird in der Ausgangsposition 62 des Ventilschließgliedes 61 und in einer ersten Öffnungsphase das Ventilschließglied 61 zusätzlich durch die Führungsstäbe 69 zu dem Führungselement 53 geführt.

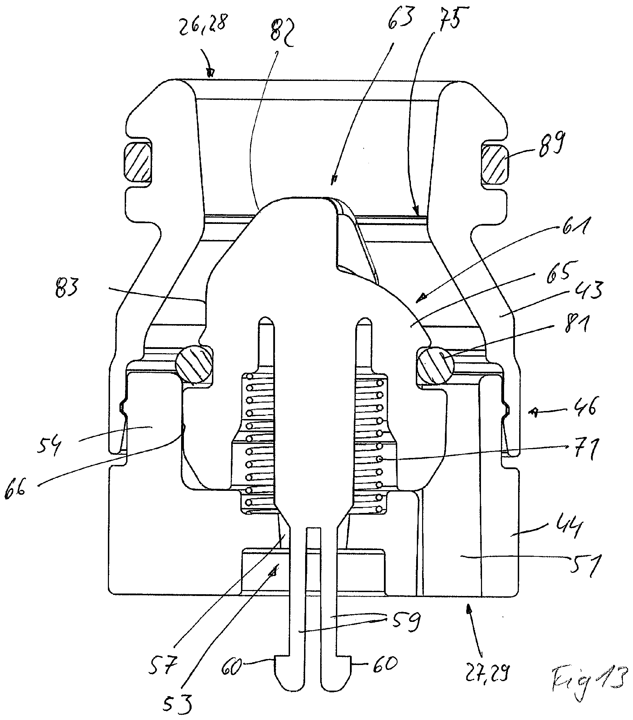

Bei dieser erfindungsgemäßen Ausführungsform greifen der Führungsabschnitt 66 und die Hülse 54 in einer Ausgangsposition 62 des Ventilschließgliedes 61 nicht ineinander. Vielmehr sind diese getrennt zueinander angeordnet. Sobald beim Übergang von einer ersten Öffnungsphase in eine zweite Öffnungsphase des Ventilschließgliedes 61 die Führungsflächen 83 der Führungsrippen 82 am Schließkörper 65 sich von dem Ventilsitz 75 lösen, greifen der Führungsabschnitt 66 und die Hülse 54 ineinander und bilden eine axiale Führung des Ventilschließgliedes 61. In einer Arbeitsposition des Ventilschließgliedes 61 gemäß Figur 13 greifen der Führungsabschnitt 66 und die Hülse 54 derart ineinander, dass das Kraftspeicherelement 71 vollständig eingeschlossen ist. Der Strömungskanal 49 erstreckt sich außerhalb des Ventilschließgliedes 61, des Führungsabschnittes 66 und der Hülse 54, so dass das Strömungsmedium mit dem Kraftspeicherelement 71 nicht in Kontakt kommt.

Die am Schließkörper 65 vorgesehenen Führungsrippen 82 können des Weiteren den Vorteil aufweisen, dass diese als sogenannte Gleichrichter wirken, das heißt, dass die Strömung des Mediums beruhigt werden kann, wodurch wiederum ein verminderter Strömungsdruckverlust ermöglicht wird.

Im Hinblick auf die weiteren Gestaltungsmerkmale des in den Figuren 10 bis 13 dargestellten Rückschlagventils wird vollumfänglich auf die vorbeschriebenen Ausführungsformen Bezug genommen.

## Patentansprüche

1. Rückschlagventil, insbesondere für einen Kälte- oder Wärmekreislauf, welches in eine Anschlussöffnung (26, 27, 28,29) einer Anschlusseinrichtung (21) oder eines Rohres (39) einsetzbar ist,
- mit einem einteiligen oder mehrteiligen Gehäuse (42), welches zumindest ein Grundgehäuse (44) umfasst, wobei eingangsseitig eine Zuführöffnung (48) und ausgangsseitig am Grundgehäuse (44) eine Abführöffnung (51) vorgesehen ist, die durch einen Strömungskanal (49) miteinander verbunden sind,
- mit einem an dem Grundgehäuse (44) vorgesehenen Führungselement (53), durch welches ein Ventilschließglied (61) zum Grundgehäuse (44) verschiebbar geführt ist, wobei das Ventilschließglied (61) durch ein Kraftspeicherelement (71) in einer Ausgangsposition (62) angeordnet ist und das Ventilschließglied (61) zum Überführen in eine Arbeitsposition (63) in Richtung auf die Abführöffnung (51) entgegen einer Stellkraft des Kraftspeicherelementes (71) verschiebbar ist, und
- das Kraftspeicherelement (71) zwischen dem Ventilschließglied (61) und dem Grundgehäuse (44) vorgesehen ist,
- das Führungselement (53) des Grundgehäuses (44) weist zumindest eine Durchbrechung (57) auf und in dieser zumindest einen Durchbrechung (57) ist zumindest ein Führungsstab (59) geführt, welcher sich ausgehend vom Ventilschließglied (61) durch die zumindest eine Durchbrechung (57) hindurch erstreckt und gegen Lösen aus der Durchbrechung (57) gesichert ist, wobei das Ventilschließglied (61) in der Ausgangsposition (62) und in einer ersten Öffnungsphase durch den zumindest einen Führungsstab (59) im Führungselement (53) und durch zumindest eine an dem Schließkörper (65) des Ventilschließgliedes (61) entgegengesetzt zum zumindest einen Führungsstab (59) ausgerichtete Führungsrippe (82) in der Anschlussöffnung (29) der Anschlusseinrichtung (21) führbar ist oder in der Anschlussöffnung (26,28) eines Ventilgehäuses (43) des Gehäuses (42) geführt ist,
- **dadurch gekennzeichnet, dass** bei der Anordnung eines Schließkörpers (65) des Ventilschließgliedes (61) in seiner Ausgangsposition oder Schließposition der Schließkörper (65) des Ventilschließgliedes (61) mit seiner Außenfläche an einem Ventilsitz (75) formschlüssig anliegt und ein Dichtelement (81) an dem Schließkörper (65) in Strömungsrichtung nachgeschaltet nur abdichtend am Ventilsitz (75) angreift,
- dass in einer zweiten Öffnungsphase bis zur Arbeitsposition (63) das Ventilschließglied (61) durch den zumindest einen Führungsstab (59) im Führungselement (53) und durch einen den zumindest einen Führungsstab (59) umgebenden Führungsabschnitt (66) am Ventilschließglied (61) und der Hülse (54) am Führungselement (53) geführt ist und,
- dass der Führungsabschnitt (66) und die Hülse (54) ineinandergreifen und eine axiale Führung des Ventilschließgliedes (61) bilden, sobald beim Übergang von der ersten Öffnungsphase in die zweite Öffnungsphase des Ventilschließgliedes (61) die Führungsflächen (83) der Führungsrippen (82) am Schließkörper sich von dem Ventilsitz (75) lösen.

2. Rückschlagventil nach Anspruch 1, **dadurch gekennzeichnet, dass** der zumindest eine Führungsstab (59) zumindest ein, vorzugsweise radial, nach außen gerichtetes Sperrelement (60) aufweist, welches dem Kraftspeicherelement (71) entgegenwirkt und das Ventilschließglied (61) in einer Ausgangsposition (62) zum Grundgehäuse (44) fixiert.

3. Rückschlagventil nach Anspruch 1 oder 2, **dadurch gekennzeichnet, dass** der wenigstens eine Führungsstab (59) vorgesehen ist, um durch die Durchbrechung (57) am Boden (55) hindurchzuführen und anschließend ein Lösen des Ventilschließgliedes (61) vom Grundgehäuse (44) sperren und vorzugsweise drei zueinander beabstandete Führungsstäbe (59) vorgesehen sind, welche sternförmig zueinander ausgerichtet und aufeinander zubewegbar sind.

4. Rückschlagventil nach einem der vorhergehenden Ansprüche, **dadurch gekennzeichnet, dass** das Kraftspeicherelement (71) koaxial zu dem zumindest einen Führungsstab (59) vorgesehen ist und vorzugsweise den zumindest einen Führungsstab (59) umgibt und/oder
dass das Kraftspeicherelement (71) vorgespannt zwischen dem Ventilschließglied (61) und dem Führungselement (53) des Grundgehäuses (44) vorgesehen ist.

5. Rückschlagventil nach einem der vorhergehenden Ansprüche, **dadurch gekennzeichnet, dass** das Ventilschließglied (61) einen kugelförmigen oder projektilförmigen Schließkörper (65) aufweist, der in Kraftrichtung des Kraftspeicherelementes (71) ausgerichtet ist und einen Ventilsitz (75) schließt, welcher vorzugsweise in einem Ventilgehäuse (43), welches an das Grundgehäuse (44) befestigbar ist oder in der Anschlusseinrichtung (21) vorgesehen ist und vorzugsweise in einem Außenumfang des Schließkörpers (65) eine Vertiefung (79) vorgesehen ist, die ein Dichtelement (81), insbesondere eine O-Ring-Dichtung, aufnimmt.

6. Rückschlagventil nach einem der vorhergehenden Ansprüche, **dadurch gekennzeichnet, dass** das Grundgehäuse (44) eine, vorzugsweise lösbare, Schnittstelle (46) aufweist, die in Richtung zum Ventilschließglied (61) weist und ein Ventilgehäuse (43) anschließbar ist und vorzugsweise einen Anschlussabschnitt (84) des Ventilgehäuses (43) innenliegend oder außenliegend zum Anschlussabschnitt (85) des Grundgehäuses (44) vorgesehen ist und vorzugsweise der Ventilsitz (75) an dem Ventilgehäuse (43) oder an einer Anschlussöffnung (26, 27, 28, 29) durch eine düsenförmige Querschnittsverengung gebildet ist.

7. Rückschlagventil nach Anspruch 6, **dadurch gekennzeichnet, dass** das Ventilgehäuse (43) eine Einschnürung (88) aufweist, in welche von außen ein Dichtelement (89) einsetzbar ist und vorzugsweise die Einschnürung (88) an einen äußeren Ringbund (87) angrenzt.

8. Rückschlagventil nach Anspruch 7, **dadurch gekennzeichnet, dass** die Schnittstelle (46) in einem zylindrischen oder konischen Abschnitt (77) des Grundgehäuses (44) vorgesehen ist, und vorzugsweise die lösbare Schnittstelle (46) als eine Rast-, Schnapp-, Steck-, Press- oder Schraubverbindung ausgebildet ist.

9. Rückschlagventil nach einem der vorhergehenden Ansprüche, **dadurch gekennzeichnet, dass** zumindest das Ventilgehäuse (43), das Grundgehäuse (44) und/oder das Ventilschließglied (61) aus einem einkomponentigen oder zweikomponentigen Kunststoff oder Kunststoff-Elastomer-Kombination hergestellt sind.

10. Rückschlagventil nach einem der vorhergehenden Ansprüche, **dadurch gekennzeichnet, dass** der kleinste Öffnungsdurchmesser der Anschlussöffnung (26, 27, 28, 29) der Anschlusseinrichtung (21) oder des Ventilgehäuses (43) ein Verhältnis zur Gesamtlänge des Rückschlagventiles (41) von 0,2 bis 4 aufweist, und/oder dass der kleinste Öffnungsdurchmesser der Anschlussöffnung (26, 27, 28, 29) der Anschlusseinrichtung (21) oder des Ventilgehäuses (43) ein Verhältnis zum Außendurchmesser des Rückschlagventils (41) von 1 bis 2,5 aufweist, und/oder der größte Außendurchmesser des Ventilschließgliedes (61) ein Verhältnis zur Länge des Ventilschließgliedes (61) von 0,3 bis 3 umfasst.

11. Rückschlagventil nach Anspruch 1, **dadurch gekennzeichnet, dass** in dem Führungsabschnitt (66) des Ventilschließgliedes (61) und der Hülse (54) des Führungselementes (53) das Kraftspeicherelement (71) vorgesehen ist, oder dass außerhalb des Führungsabschnitts (66) und der Hülse (54) des Führungselementes (53) das Kraftspeicherelement (71) vorgesehen ist, und vorzugsweise der Führungsabschnitt (66) des Ventilschließgliedes (61) an dem Führungselement (53) durch Längsrippen geführt ist, welche zwischen dem Führungsabschnitt (66) und der Hülse (54) vorgesehen sind, wobei die Hülse (54) innerhalb oder außerhalb des Führungselementes (53) verschiebbar geführt ist.

12. Verwendung eines Rückschlagventils in einer Anschlusseinrichtung (21) für einen inneren Wärmetauscher (14) mit einem Anschlussblock (22), der eine erste und eine zweite Durchgangsbohrung (24, 25) aufweist, wobei eine Einlassöffnung (26) der ersten Durchgangsbohrung (24) hochdruckseitig mit einem Anschluss des inneren Wärmetauschers (14) und eine Auslassöffnung (27) der ersten Durchgangsbohrung (24) mit einem Eingang eines Wärmeüberträgers (16) verbindbar ist und eine Einlassöffnung (28) der zweiten Durchgangsbohrung (25) mit einem Auslass des Wärmeüberträgers (16) und einer Einlassöffnung (28) der zweiten Durchgangsbohrung (25) niederdruckseitig mit dem Anschluss des inneren Wärmetauschers (14) verbindbar ist und die zweite Durchgangsbohrung (25) eine Auslassöffnung (29) aufweist, die zum inneren Wärmetauscher (14) führt, **dadurch gekennzeichnet, dass** das Rückschlagventil (41) nach einem der Ansprüche 1 bis 11 in die Auslassöffnung (29) der zweiten Durchgangsbohrung (25) einsetzbar ist und dass das Rückschlagventil (41) durch den inneren Wärmetauscher (14) in der Auslassöffnung fixiert gehalten ist, oder dass das Rückschlagventil (41) durch das Gehäuse (42) form- und/oder kraftschlüssig in der Auslassöffnung (29) gehalten ist.

13. Verwendung eines Rückschlagventils in einem Wärmetauscher (14), welcher ein inneres Rohr (39) und ein äußeres Rohr (36) aufweist, deren Enden mit einer Anschlusseinrichtung (21) verbindbar sind, **dadurch gekennzeichnet, dass** das Rückschlagventil (41) nach einem der Ansprüche 1 bis 11 in ein inneres Rohr (39) des Wärmetauschers (14) einsetzbar ist und dass das Rückschlagventil (41) durch das Gehäuse (42) des Rückschlagventils (41) kraft- und/oder formschlüssig in dem inneren Rohr (39) des Wärmetauschers (14) gehalten ist.

14. Verwendung eines Rückschlagventils nach einem der vorhergehenden Ansprüche 1 bis 11 in einem Anschlussflansch eines Sammlers, insbesondere Kältemittelsammlers.

## Claims

1. Check valve, in particular for a cooling or heating circuit, which is insertable into a connection opening (26, 27, 28, 29) of a connection device (21) or a tube (39),
- having a one-part or multi-part housing (42), which comprises at least one basic housing (44), wherein a feed opening (48) is provided on the inlet side and a discharge opening (51) is provided on the outlet side on the basic housing (44), which are connected to each other by a flow channel (49),
- having a guide element (53) provided on the basic housing (44), through which a valve closing member (61) is displaceably guided to the basic housing (44), wherein the valve closing member (61) is arranged in an initial position (62) by means of an energy storage element (71), and the valve closing member (61) is displaceable in the direction of the discharge opening (51) against an actuating force of the energy storage element (71) in order to transfer into a working position (63), and
- the energy storage element (71) is provided between the valve closing member (61) and the basic housing (44),
- the guide element (53) of the basic housing (44) has at least one aperture (57), and at least one guide rod (59) is guided in this at least one aperture (57), said guide rod extending from the valve closing member (61) through the at least one aperture (57) and being secured against disengagement from the aperture (57),
- wherein the valve closing member (61), in the initial position (62) and in a first opening phase, is guidable in the connection opening (29) of the connection device (21) or is guided in the connection opening (26, 28) of a valve housing (43) of the housing (42) by the at least one guide rod (59) in the guide element (53) and by at least one guide rib (82) positioned on the closing body (65) of the valve closing member (61) in the opposite direction to the at least one guide rod (59), engaging in the connection opening (29) of the connection device (21) or is guided in the connection opening (26,28) of a valve housing (43), **characterized in**
- **that** in the arrangement of the closing body (65) of the valve closing member (61) in its initial position or closing position, the outer surface of the closing body (65) of the valve closing member (61) is in positive contact with a valve seat (75), and a sealing element (81) on the closing body (65) downstream in the direction of flow only acts on the valve seat (75) in a sealing manner,
- **that** in a second opening phase, the valve closing member (61) is guided to the working position (63) by the at least one guide rod (59) in the guide element (53) and by a guide section (66) surrounding the at least one guide rod (59) on the valve closing member (61) and the sleeve (54) on the guide element (53) and,
- **that** as soon as the guide surfaces (83) of the guide ribs (82) on the closing body (65) detach from the valve seat (75) during the transition from a first opening phase to a second opening phase of the valve closing member (61), the guide section (66) and the sleeve (54) engage with each other and form an axial guide of the valve closing member (61).

2. Check valve according to claim 1, **characterised in that** the at least one guide rod (59) has at least one, preferably radially, outwardly directed blocking element (60) which counteracts the energy storage element (71) and fixes the valve closing member (61) in an initial position (62) relative to the basic housing (44).

3. Check valve according to claim 1 or 2, **characterised in that** the at least one guide rod (59) is provided in order to pass through the aperture (57) on the base (55) and subsequently to block the valve closing member (61) detaching from the basic housing (44) and preferably three spaced-apart guide rods (59) are provided, which are aligned with one another in a star shape and are movable towards one another.

4. Check valve according to one of the preceding claims, **characterised in that** the energy storage element (71) is provided coaxially to the at least one guide rod (59) and preferably surrounds the at least one guide rod (59) and/or
that the energy storage element (71) is provided in a pre-tensioned manner between the valve closing member (61) and the guide element (53) of the basic housing (44).

5. Check valve according to one of the preceding claims, **characterised in that** the valve closing member (61) has a spherical or projectile-shaped closing body (65), which is aligned in the force direction of the energy storage element (71) and closes a valve seat (75), which is preferably provided in a valve housing (43), which is fastenable to the basic housing (44) or in the connecting device (21) and preferably a recess (79) is provided in an outer periphery of the closing body (65), said recess receiving a sealing element (81), in particular an O-ring seal.

6. Check valve according to one of the preceding claims, **characterised in that** the basic housing (44) has a, preferably detachable, interface (46) which points in the direction of the valve closing member (61) and is connectable to a valve housing (43) and preferably a connection section (84) of the valve housing (43) is provided inside or outside the connection section (85) of the basic housing (44) and preferably the valve seat (75) is formed on the valve housing (43) or on a connection opening (26, 27, 28, 29) by a nozzle-shaped cross-sectional narrowing.

7. Check valve according to claim 6, **characterised in that** the valve housing (43) has a constriction (88), into which a sealing element (89) is insertable from the outside and preferably the constriction (88) adjoins an outer ring collar (87).

8. Check valve according to claim 7, **characterised in that** the interface (46) is provided in a cylindrical or conical section (77) of the basic housing (44) and preferably the detachable interface (46) is formed as a latch, snap, plub, press or screw connection.

9. Check valve according to one of the preceding claims, **characterised in that** at least the valve housing (43), the basic housing (44) and/or the valve closing member (61) are manufactured from a one-component or two-component plastic or plastic-elastomer combination.

10. Check valve according to one of the preceding claims, **characterised in that** the smallest opening diameter of the connection opening (26, 27, 28, 29) of the connection device (21) or the valve housing (43) has a ratio to the total length of the check valve (41) of from 0.2 to 4 and/or the smallest opening diameter of the connection opening (26, 27, 28, 29) of the connection device (21) or the valve housing (43) has a ratio to the outer diameter of the check valve (41) of from 1 to 2.5 and/or the largest outer diameter of the valve closing member (61) comprises a ratio to the length of the valve closing member (61) of from 0.3 to 3.

11. Check valve according to claim 1, **characterised in that** the energy storage element (71) is provided in the guide section (66) of the valve closing member (61) and the sleeve (54) of the guide element (53), or the energy storage element (71) is provided outside the guide section (66) and the sleeve (54) of the guide element (53) and preferably the guide section (66) of the valve closing member (61) is guided on the guide element (53) by the longitudinal ribs, which are provided between the guide section (66) and the sleeve (54), wherein the sleeve (54) is displaceably guided within or outside the guide element (53).

12. Use of a check valve in a connection device (21) for an internal heat exchanger (14) having a connection block (22), which has a first and second through-bore (24, 25), wherein an inlet opening (26) of the first through-bore (24) is connectable on the highpressure side to a connection of the internal heat exchanger (14), and an outlet opening (27) of the first through-bore (24) is connectable to an inlet of a heat exchanger (16), and an inlet opening (28) of the second through-bore (25) is connectable on the low-pressure side to an outlet of the heat exchanger (16) with the connection of the internal heat exchanger (14), and the second through-bore (25) has an outlet opening (29) which leads to the internal heat exchanger (14), **characterised in that** the check valve (41) according to one of claims 1 to 11 is insertable into the outlet opening (29) of the second through-bore (25), and that the check valve (41) is held fixed in the outlet opening by the internal heat exchanger (14), or that the check valve (41) is held in a positive-locking and/or force-locking manner in the outlet opening (29) by the housing (42).

13. Use of a check valve in a heat exchanger (14), which has an inner tube (39) and an outer tube (36), the ends of which are connectable to a connection device (21), **characterised in that** the check valve (41) is insertable into an inner tube (39) of the heat exchanger (14) according to one of claims 1 to 11, and the check valve (41) is held in a positive-locking and/or force-locking manner in the inner tube (39) of the heat exchanger (14) by means of the housing (42) of the check valve (41).

14. Use of a Check valve according to one of the preceding claims 1 to 11 in a connecting flange of a collector, in particular a refrigerant collector.

## Revendications

1. Soupape anti-retour, en particulier pour un circuit frigorifique ou thermique, qui peut être installée dans un orifice de raccordement (26, 27, 28, 29) d'un dispositif de raccordement (21) ou d'un tube (39),
- pourvue d'un boîtier (42) en une ou plusieurs parties qui comprend au moins un boîtier de base (44), un orifice d'amenée (48) étant prévu, côté entrée, et un orifice d'évacuation (51) étant prévu, côté sortie, sur le boîtier de base (44) lesquels sont reliés entre eux par un canal d'écoulement (49),
- pourvue d'un élément de guidage (53) qui est prévu sur le boîtier de base (44) et grâce auquel un organe de fermeture de soupape (61) est guidé de manière à pouvoir se déplacer par rapport au boîtier de base (44), l'organe de fermeture de soupape (61) étant disposé dans une position initiale (62) par un élément accumulateur d'énergie (71), et ledit organe de fermeture de soupape (61) pouvant être déplacé à l'opposé d'une puissance de réglage de l'élément accumulateur d'énergie (71), en direction de l'orifice d'évacuation (51), en vue de passer dans une position de fonctionnement (63), et
- l'élément accumulateur d'énergie (71) étant prévu entre l'organe de fermeture de soupape (61) et le boîtier de base (44),
- l'élément de guidage (53) du boîtier de base (44) présentant au moins un trou de passage (57) et dans ledit au moins un trou de passage (57) étant guidée au moins une tige de guidage (59) qui s'étend, depuis l'organe de fermeture de soupape (61), à travers ledit au moins un trou de passage (57) et qui est arrêtée de manière à ne pas sortir dudit trou de passage (57), l'organe de fermeture de soupape (61), dans la position initiale (62) et pendant une première phase d'ouverture, pouvant être guidé dans l'orifice de raccordement (29) du dispositif de raccordement (21) ou étant guidé dans l'orifice de raccordement (26, 28) d'un boîtier de soupape (43) par ladite au moins une tige de guidage (59) prévue dans l'élément de guidage (53) et par au moins une nervure de guidage (82) prévue sur le corps de fermeture (65) de l'organe de fermeture de soupape (61) et orientée à l'opposé de ladite au moins une tige de guidage (59),
**caractérisée en ce que** lorsqu'un corps de fermeture (65) de l'organe de fermeture de soupape (61) se trouve dans sa position initiale ou position fermée, ledit corps de fermeture (65) de l'organe de fermeture de soupape (61) repose, par conjugaison de formes, avec sa surface extérieure contre un siège de soupape (75) et un élément d'étanchéité (81) prévu sur le corps de fermeture (65) appuie, en aval dans le sens d'écoulement, contre le siège de soupape (75) en assurant uniquement une fonction d'étanchéité.
- **en ce que** pendant une deuxième phase d'ouverture et jusqu'à ce que soit atteinte la position de fonctionnement (63), l'organe de fermeture de soupape (61) est guidé dans l'élément de guidage (53) grâce à ladite au moins une tige de guidage (59) ainsi que sur l'élément de guidage (53) grâce à une partie de guidage (66) qui est prévue sur l'organe de fermeture de soupape (61) et qui entoure ladite au moins une tige de guidage (59) et grâce au manchon (54).
- **en ce que** la partie de guidage (66) et le manchon (54) entrent en prise l'un dans l'autre et forment un guidage axial de l'organe de fermeture de soupape (61) dès que les surfaces de guidage (83) des nervures de guidage (82) prévues sur le corps de fermeture se détachent du siège de soupape (75) lorsque ledit organe de fermeture de soupape (61) passe de la première phase d'ouverture à la deuxième phase d'ouverture.

2. Soupape anti-retour selon la revendication 1, **caractérisée en ce que** ladite au moins une tige de guidage (59) présente au moins un élément de blocage (60), de préférence dirigé radialement vers l'extérieur, qui agit en sens contraire de l'élément accumulateur d'énergie (71) et qui fixe l'organe de fermeture de soupape (61) dans une position initiale (62) par rapport au boîtier de base (44).

3. Soupape anti-retour selon la revendication 1 ou 2, **caractérisée en ce que** ladite au moins une tige de guidage (59) est prévue pour passer à travers le trou de passage (57) ménagé dans le fond (55) et pour empêcher ensuite que l'organe de fermeture de soupape (61) ne se détache du boîtier de base (44) et **en ce qu'**il est prévu de préférence trois tiges de guidage (59) espacées les unes des autres qui sont orientées en étoile les unes par rapport aux autres et qui peuvent se déplacer les unes vers les autres.

4. Soupape anti-retour selon l'une quelconque des revendications précédentes, **caractérisée en ce que** l'élément accumulateur d'énergie (71) est prévu de manière coaxiale par rapport à ladite au moins une tige de guidage (59) et entoure de préférence ladite au moins une tige de guidage (59) et/ou **en ce que** l'élément accumulateur d'énergie (71) est prévu en précontrainte entre l'organe de fermeture de soupape (61) et l'élément de guidage (53) du boîtier de base (44) .

5. Soupape anti-retour selon l'une quelconque des revendications précédentes, **caractérisée en ce que** l'organe de fermeture de soupape (61) présente un corps de fermeture (65) en forme de sphère ou de projectile qui est orienté dans le sens de la force exercée par l'élément accumulateur d'énergie (71) et qui ferme un siège de soupape (75) qui est prévu de préférence dans un boîtier de soupape (43) qui peut être fixé au boîtier de base (44) ou dans le dispositif de raccordement (21), et **en ce que** de préférence dans une circonférence extérieure du corps de fermeture (65) est prévu un creux (79) qui reçoit un élément d'étanchéité (81), en particulier un joint torique.

6. Soupape anti-retour selon l'une quelconque des revendications précédentes, **caractérisée en ce que** le boîtier de base (44) présente une interface (46), de préférence séparable, qui est tournée en direction de l'organe de fermeture de soupape (61) et qui peut être raccordée à un boîtier de soupape (43), et **en ce que** de préférence une partie de raccordement (84) du boîtier de soupape (43) est prévue de manière à se trouver à l'intérieur ou à l'extérieur de la partie de raccordement (85) du boîtier de base (44), et **en ce que** le siège de soupape (75) prévu sur le boîtier de soupape (43) ou sur un orifice de raccordement (26, 27, 28, 29) est formé de préférence par un rétrécissement de la section transversale en forme de buse.

7. Soupape anti-retour selon la revendication 6, **caractérisée en ce que** le boîtier de soupape (43) présente un étranglement (88) dans lequel un élément d'étanchéité (89) peut être mis en place depuis l'extérieur et **en ce que** l'étranglement (88) est de préférence contigu à un collet annulaire extérieur (87) .

8. Soupape anti-retour selon la revendication 7, **caractérisée en ce que** l'interface (46) est prévue dans une partie (77) cylindrique ou conique du boîtier de base (44), et **en ce que** l'interface séparable (46) est réalisée de préférence en tant qu'assemblage à enclenchement, assemblage à encliquetage, assemblage à emboîtement, assemblage serti ou assemblage vissé.

9. Soupape anti-retour selon l'une quelconque des revendications précédentes, **caractérisée en ce qu'**au moins le boîtier de soupape (43), le boîtier de base (44) et/ou l'organe de fermeture de soupape (61) sont réalisés en une matière plastique à un ou deux composants ou en une combinaison de plastique et élastomère.

10. Soupape anti-retour selon l'une quelconque des revendications précédentes, **caractérisée** en ce le plus petit diamètre d'ouverture de l'orifice de raccordement (26, 27, 28, 29) du dispositif de raccordement (21) ou du boîtier de soupape (43) présente un rapport compris entre 0,2 et 4 par rapport à la longueur totale de la soupape anti-retour (41) et/ou en ce que le plus petit diamètre d'ouverture de l'orifice de raccordement (26, 27, 28, 29) du dispositif de raccordement (21) ou du boîtier de soupape (43) présente un rapport compris entre 1 et 2,5 par rapport au diamètre extérieur de la soupape anti-retour (41) et/ou en ce que le plus grand diamètre extérieur de l'organe de fermeture de soupape (61) comprend un rapport compris entre 0, 3 et 3 par rapport à la longueur de l'organe de fermeture de soupape (61).

11. Soupape anti-retour selon la revendication 1, **caractérisée en ce que** l'élément accumulateur d'énergie (71) est prévu dans la partie de guidage (66) de l'organe de fermeture de soupape (61) et dans le manchon (54) de l'élément de guidage (53) ou **en ce que** l'élément accumulateur d'énergie (71) est prévu à l'extérieur de la partie de guidage (66) et du manchon (54) de l'élément de guidage (53), et **en ce que** la partie de guidage (66) de l'organe de fermeture de soupape (61) est guidée de préférence le long de l'élément de guidage (53) par des nervures longitudinales qui sont prévues entre la partie de guidage (66) et le manchon (54), le manchon (54) étant guidé de manière à pouvoir se déplacer à l'intérieur ou à l'extérieur de l'élément de guidage (53) .

12. Utilisation d'une soupape anti-retour dans un dispositif de raccordement (21) pour un échangeur thermique interne (14) pourvu d'un bloc de raccordement (22) qui présente un premier et un deuxième trou traversant (24, 25), un orifice d'amenée (26) du premier trou traversant (24) pouvant être relié, côté haute pression, à un raccordement de l'échangeur thermique interne (14) et un orifice d'évacuation (27) du premier trou traversant (24) pouvant être relié à une entrée d'un transmetteur thermique (16) et un orifice d'amenée (28) du deuxième trou traversant (25) pouvant être relié à une évacuation du transmetteur thermique (16) et un orifice d'amenée (28) du deuxième trou traversant (25) pouvant être relié, côté basse pression, au raccordement de l'échangeur thermique interne (14), et le deuxième trou traversant (25) présentant un orifice d'évacuation (29) qui mène à l'échangeur thermique interne (14), **caractérisée en ce que** la soupape anti-retour (41) selon l'une quelconque des revendications 1 à 11 peut être installée dans l'orifice d'évacuation (29) du deuxième trou traversant (25) et **en ce que** la soupape anti-retour (41) est maintenue fixée dans ledit orifice d'évacuation par l'échangeur thermique interne (14) ou **en ce que** la soupape anti-retour (41) est maintenue par conjugaison de formes et/ou de forces dans l'orifice d'évacuation (29) grâce au boîtier (42).

13. Utilisation d'une soupape anti-retour dans un échangeur thermique (14) qui présente un tube interne (39) et un tube externe (36) dont les extrémités peuvent être reliées à un dispositif de raccordement (21), **caractérisée en ce que** la soupape anti-retour (41) selon l'une quelconque des revendications 1 à 11 peut être installée dans un tube intérieur (39) de l'échangeur thermique (14) et **en ce que** la soupape anti-retour (41) est maintenue par conjugaison de forces et/ou de formes dans le tube intérieur (39) de l'échangeur thermique (14) grâce au boîtier (42) de ladite soupape anti-retour (41).

14. Utilisation d'une soupape anti-retour selon l'une quelconque des revendications précédentes 1 à 11 dans une bride de raccordement d'un collecteur, en particulier d'un collecteur de réfrigérant.
